# FASCICULE DE BREVET EUROPEEN

(11) **EP 0 881 424 B1**
(45) Date de publication et mention de la délivrance du brevet: **17.04.2002**
(21) Numéro de dépôt: 98108293.6
(22) Date de dépôt: 07.05.1998
(51) Int. Cl.: F16T 1/00, F16T 1/38, F16T 1/24

(54) **Evacuateur de condensat pour installations de traitement de l'air ou de gaz en général**
Kondensatableiter für Luft- oder Gasbehandlungsanlagen
Condensate removal device for air or gas treatment plants

(30) Priorité: 28.05.1997 LU 90068
(43) Date de publication de la demande: 02.12.1998
(73) Titulaire: Truffi International S.A., 5335 Moutfort (LU)
(72) Inventeur: Baynton, Allan G., Westcliff-on-Sea, Essex SS0 8NN (GB)
(74) Mandataire: Schmitt, Armand

(56) Documents cités:
- EP-A- 0 391 250
- DE-A- 4 323 004
- LU-A- 83 505
- US-A- 4 276 354
- US-A- 4 387 732

## Description

La présente invention a pour objet un évacuateur de condensat pour installations de traitement de l'air ou de gaz en général.

Dans les installations pour le traitement de l'air, par exemple, les installations de compression d'air, il est prévu d'utiliser ce qu'on appelle un évacuateur de condensat, comprenant un récipient dans lequel on recueille le liquide de condensation ou condensat qui se forme dans l'installation, ce condensat étant évacué automatiquement à travers une vanne lorsqu'il atteint un niveau prédéterminé.

Il existe des évacuateurs de condensat de type mécanique, dans lesquels l'évacuation du liquide de condensation s'effectue sous l'action d'un flotteur qui, lorsque le niveau prédéterminé du liquide est atteint dans l'évacuateur de condensat, ouvre une vanne mécanique par l'intermédiaire d'un levier en permettant ainsi au liquide de s'écouler vers l'extérieur par un conduit qui est justement intercepté par cette vanne.

Il existe aussi des évacuateurs de condensat plus élaborés, de type électronique, dans lesquels il est prévu un capteur de niveau et une électrovanne reliés à une centrale électronique qui, lorsque l'arrivée au niveau de liquide prédéterminé a été détectée par le capteur, commande l'ouverture de l'électrovanne en permettant ainsi au liquide de s'écouler à l'extérieur par un conduit qui est justement intercepté par cette vanne comme dans le cas précédent.

Le récipient est différent dans les deux types d'évacuateurs de condensat et ceci impose au fabricant d'utiliser deux chaînes de fabrication différentes pour ce récipient. On observe donc des coûts de production élevés, du fait de la nette séparation des deux fabrications.

Le but de la présente invention consiste à apporter remède à cette carence d'optimisation de la production.

Ce but est atteint au moyen d'un évacuateur de condensat pour installations de traitement de l'air ou de gaz en général, qui comprend un récipient définissant intérieurement une cuvette de collecte du condensat et muni de trous servant à relier le récipient à l'installation et à l'extérieur et à insérer des dispositifs dans l'évacuateur de condensat, caractérisé en ce que ledit récipient est composé de deux demi-coques accouplées à joint étanche et dans lesquelles sont ménagés deux trous pour l'entrée du condensat dans le récipient et pour l'égalisation de la pression régnant dans le récipient par rapport à celle régnant dans l'installation, un troisième trou destiné à l'évacuation du condensat à travers une vanne mécanique ou à l'insertion d'un capteur de détection du niveau du condensat dans le récipient, et un quatrième trou destiné à rester bouché lorsque le troisième trou est destiné à l'évacuation du condensat ou à l'insertion d'une vanne à commande extérieure pour l'évacuation du condensat lorsque le troisième trou contient un détecteur de niveau.

On a ainsi un récipient qui peut être utilisé pour assembler un évacuateur de condensat de type mécanique ou de type électronique, en optimisant la production.

D'autres caractéristiques et avantages de l'invention seront mieux compris à la lecture de la description qui va suivre, d'un exemple de réalisation et en se référant aux dessins annexés sur lesquels:
les Figures 1, 2 représentent respectivement des évacuateurs de condensat de type mécanique et de type électronique qui utilisent le même récipient, conformément à l'invention;
la figure 3 est une vue selon la flèche 3 de l'évacuateur de condensat de la figure 2.

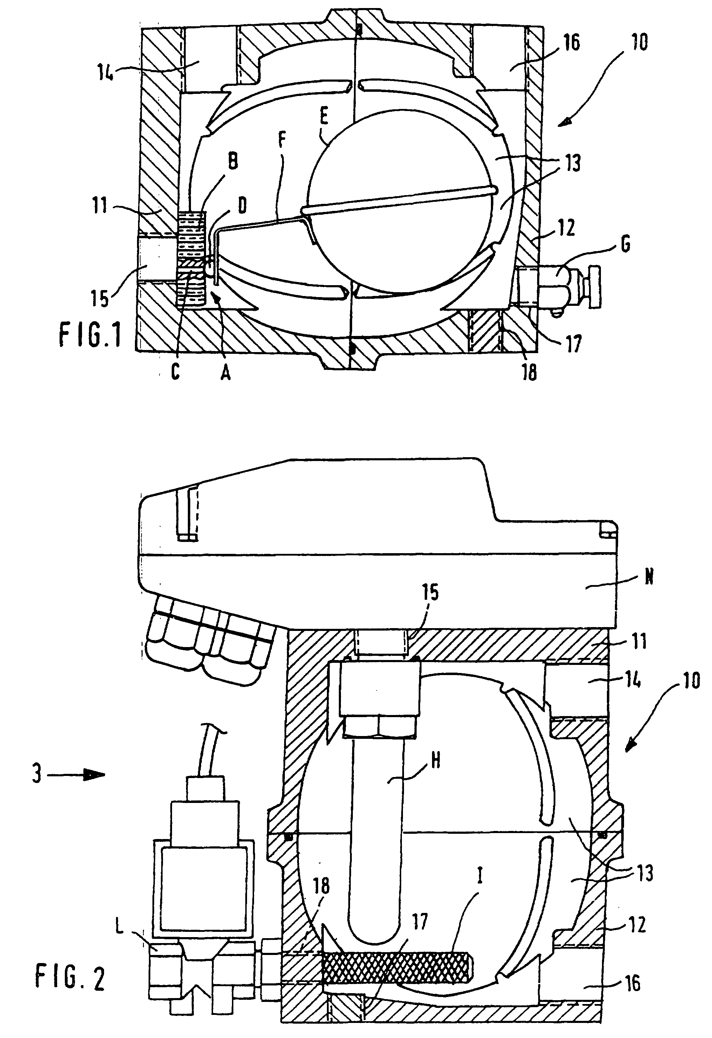

Le récipient utilisé dans les évacuateurs de condensat des figures 1, 2, désigné dans son ensemble par 10, est de forme sensiblement ovoïdale et comprend deux demi-coques 11, 12 accouplées à joint étanche.

Les deux demi-coques 11, 12 définissent intérieurement une cuvette 13 de collecte du liquide de condensation ayant une forme sensiblement ovoïdale.

Dans la demi-coque 11, sont ménagés un trou traversant 14 et un trou traversant 15 ayant des axes orthogonaux entre eux. Dans la demi-coque 12, sont ménagés un trou traversant 16 et un trou traversant 17 ayant des axes orthogonaux entre eux et un trou traversant 18 ayant un axe parallèle à l'axe du trou 16. Les trous 14 et 16 ont des axes parallèles entre eux et sont disposés sur un même côté du récipient 10. Les trous 15 et 17 ont eux aussi des axes parallèles entre eux et sont disposés sur des côtés opposés du récipient 10. Le trou 18 est disposé sur un côté du récipient 10 qui est à l'opposé des trous 14, 16.

Dans l'évacuateur de condensat de type mécanique de la figure 1, le trou 14 est relié à un conduit qui fait affluer le liquide de condensation de l'installation de traitement de l'air dans la cuvette collectrice 13. Le trou 16 est au contraire relié à un autre conduit provenant de l'installation pour égaliser la pression régnant dans la cuvette collectrice 13 avec la pression régnant dans l'installation, afin de permettre l'afflux du liquide de condensation dans la cuvette collectrice. Au droit du trou 15, à l'intérieur de la cuvette collectrice 13, est fixée une vanne mécanique A qui comprend un corps B dans lequel sont ménagés des passages C qui mettent la cuvette collectrice 13 en communication avec le trou 15 et, de cette façon, avec l'extérieur; un obturateur hémisphérique D de la vanne A, relié à un flotteur E par un levier F articulé sur le corps B, ouvre ou ferme sur un côté les passages C: lorsqu'on atteint un niveau prédéterminé du liquide de condensation, le flotteur E se soulève et place l'obturateur D en position d'ouverture, en permettant ainsi au liquide de condensation de s'évacuer de la cuvette collectrice 13 à l'extérieur à travers les passages C et le trou 15. Dans le trou 17, est encastré un robinet G pour l'évacuation manuelle du liquide de condensation lorsque cela est nécessaire. Le trou 18 est au contraire bouché.

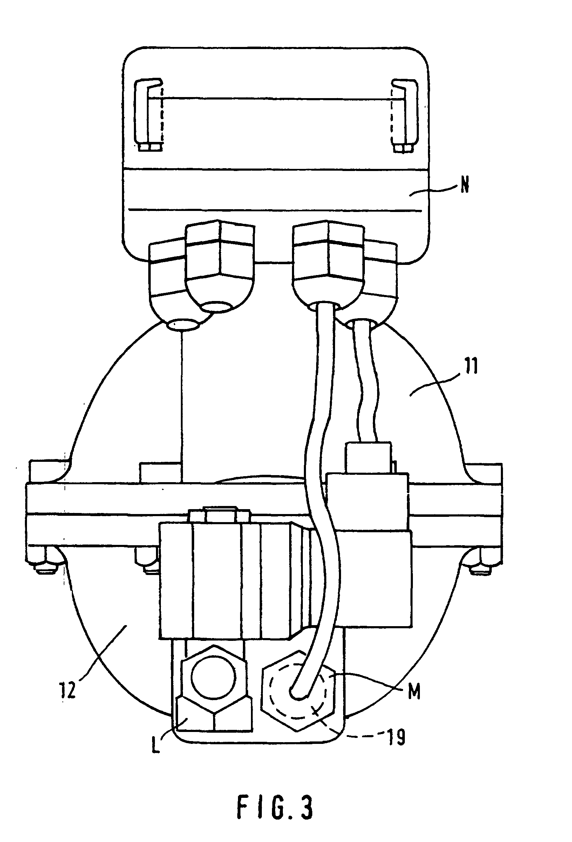

Dans l'évacuateur de condensat de type électronique de la figure 2, le récipient 10 se trouve, en position de travail, tourné de 90° dans le sens des aiguilles d'une montre par rapport à la position de fonctionnement de la figure 1, qui est relative à l'évacuateur de condensat de type mécanique. Dans ce cas, le trou 16 est relié au conduit d'entrée du liquide de condensation et le trou 14 est relié au conduit d'égalisation de la pression. Dans le trou 15, est encastré un capteur du niveau de type capacitif, indiqué par H, qui s'étend à l'intérieur de la cuvette collectrice 13. Le trou 17 est bouché. Dans le trou 18, est inséré le raccord I d'une électrovanne L; ce raccord se prolonge à l'intérieur de la cuvette collectrice 13. Dans la demi-coque 12, est ménagé un autre trou traversant, voisin du trou 18, et d'axe parallèle à l'axe de ce dernier, représenté en trait interrompu sur la figure 3 et désigné par 19, dans lequel est encastrée une résistance électrique M; cet autre trou est bouché dans l'évacuateur de condensat de type mécanique de la figure 1. Sur le récipient 10 est fixée une tête N contenant une centrale électronique connectée au capteur H, à l'électrovanne L et à la résistance électrique M. Le capteur H signale à la centrale l'arrivée à un niveau prédéterminé du liquide de condensation dans la cuvette collectrice 13 et, en conséquence, la centrale commande l'ouverture de l'électrovanne L pour évacuer le liquide de condensation à l'extérieur. Dans le cas où l'évacuateur de condensat se trouve dans un environnement de température inférieure à 0° C, la centrale active la résistance électrique pour éviter que le liquide de condensation ne gèle.

Comme on l'a vu, le récipient 10 peut être utilisé pour réaliser aussi bien un évacuateur de condensat de type mécanique qu'un évacuateur de condensat de type électronique.

De cette façon on optimise la production des deux types d'évacuateurs de condensat, en ce sens qu'avec la même chaîne de fabrication, on réalise un récipient qui peut être utilisé pour les deux types d'évacuateurs de condensat. L'assemblage est aussi favorisé parce qu'on trouve les mêmes trous de fixation dans les deux cas.

Le récipient 10 peut avantageusement être réalisé par coulée sous pression dans un moule.

La forme ovoïdale du récipient 10 et de la cuvette collectrice 13 confère une robustesse particulière au récipient lui-même.

De toute façon, on peut prévoir pour le récipient et pour la cuvette collectrice des configurations différentes de la conformation ovoïdale.

Par ailleurs, la disposition et le nombre des trous du récipient peuvent varier. Par exemple, le trou 19 peut être omis dans le cas où l'évacuation de condensat travaille toujours à des températures supérieures à 0° C et où, en conséquence, il n'est pas nécessaire de prévoir une résistance électrique. Toutefois, il convient de dire que la disposition des trous qui est représentée se révèle avantageuse aussi bien du point de vue de la réalisation du récipient que d'un point de vue fonctionnel.

Les dispositifs qui doivent être prévus à l'intérieur et à l'extérieur du récipient peuvent eux aussi varier en conformation et en type.

Au lieu de réaliser les trous 18, 19 traversants, on peut réaliser à leur place de petits trous borgnes d'amorçage et, lorsqu'on doit assembler un évacuateur de condensat de type électronique, on perce les trous traversants dans une phase ultérieure.

## Revendications

1. Evacuateur de condensat pour installations de traitement de l'air ou de gaz en général, qui comprend un récipient (10) définissant intérieurement une cuvette (13) de collecte du condensat et muni de trous servant à relier le récipient à l'installation et à l'extérieur et à insérer des dispositifs dans l'évacuateur de condensat, **caractérisé en ce que** ledit récipient (10) est composé de deux demi-coques (11, 12) accouplées à joint étanche et dans lesquelles sont ménagés deux trous (14, 16) pour l'entrée du condensat dans le récipient (10) et pour l'égalisation de la pression régnant dans le récipient (10) par rapport à celle régnant dans l'installation, un troisième trou (15) destiné à l'évacuation du condensat à travers une vanne mécanique (A) ou à l'insertion d'un capteur (H) de détection du niveau du condensat dans le récipient (10), et un quatrième trou (18) destiné à rester bouché lorsque le troisième trou (15) est destiné à l'évacuation du condensat ou à l'insertion d'une vanne (L) à commande extérieure pour l'évacuation du condensat lorsque le troisième trou (15) contient un détecteur de niveau (H)

2. Evacuateur de condensat selon la revendication 1, dans lequel, dans l'une des deux demi-coques (11, 12), est pratiqué un cinquième trou (17) destiné à l'insertion d'un robinet (G) d'évacuation manuelle du condensat lorsque le quatrième trou (18) est bouché, ou destiné à être bouché lorsque la vanne (L) à commande extérieure est insérée dans le quatrième trou (18).

3. Evacuateur de condensat selon la revendication 1 ou 2, dans lequel, dans l'une des deux demi-coques (11, 12) est ménagé un autre trou (19) destiné à être bouché lorsque le quatrième trou (18) est bouché, ou destiné à contenir une résistance électrique (M) pour le chauffage du liquide de condensation lorsque la vanne (L) à commande extérieure est insérée dans le quatrième trou (18).

4. Evacuateur de condensat selon la revendication 1, dans lequel les deux trous (14, 16) d'entrée et d'égalisation sont ménagés, l'un (14) dans une demi-coque (11) et l'autre dans l'autre demi-coque (12), ont des axes parallèles entre eux et sont disposés sur un même côté du récipient (10), le troisième trou (15) est ménagé dans l'une (11) des deux demi-coques, a un axe orthogonal aux trous (14, 16) d'entrée et d'égalisation et est disposé sur un autre côté du récipient (10), et le quatrième trou (18) est ménagé dans l'autre (12) des deux demi-coques, a un axe parallèle aux deux trous (14, 16) d'entrée et d'égalisation et est disposé sur un autre côté du récipient (10), qui est à l'opposé du côté sur lequel sont disposés les trous (14, 16) d'entrée et d'égalisation.

5. Evacuateur de condensat selon la revendication 2, dans lequel les deux trous (14, 16) d'entrée et d'égalisation sont ménagés, l'un (14) dans une demi-coque (11) et l'autre dans l'autre demi-coque (12), ont des axes parallèles entre eux et sont disposés sur un même côté du récipient (10), le troisième trou (15) est ménagé dans l'une (11) des deux demi-coques, a un axe orthogonal aux trous (14, 16) d'entrée et d'égalisation, et est disposé sur un autre côté du récipient (10), le quatrième trou (18) est ménagé dans l'autre (12) des deux demi-coques, a un axe parallèle aux deux trous (14, 16) d'entrée et d'égalisation, et est disposé sur un autre côté du récipient (10) qui est à l'opposé par rapport au côté sur lequel sont disposés les trous (14, 16) d'entrée et d'égalisation, et le cinquième trou (17) est ménagé dans l'autre (12) des deux demi-coques, a un axe orthogonal aux trous (14, 16) d'entrée et d'égalisation, et est disposé sur encore un autre côté du récipient (10) qui est à l'opposé du côté sur lequel est disposé le troisième trou (15).

6. Evacuateur de condensat selon la revendication 3, dans lequel les deux trous (14, 16) d'entrée et d'égalisation sont ménagés, l'un (14) dans une demi-coque (11) et l'autre dans l'autre demi-coque (12), ont des axes parallèles entre eux et sont disposés sur un même côté du récipient (10), le troisième trou (15) est ménagé dans l'une (11) des deux demi-coques, a un axe orthogonal aux trous (14, 16) d'entrée et d'égalisation et est disposé sur un autre côté du récipient (10), le quatrième (18) est ménagé dans l'autre (12) des deux demi-coques, a un axe parallèle aux deux trous (14, 16) d'entrée et d'égalisation, et est disposé sur un autre côté du récipient (10) qui est à l'opposé par rapport au côté dans lequel sont disposés les trous (14, 16) d'entrée et d'égalisation, et ledit autre trou (19) est disposé à proximité du quatrième trou (18) sur le même côté, et a un axe parallèle à celui-ci.

7. Evacuateur de condensat selon une quelconque des revendications précédentes, dans lequel le récipient (10) a une forme sensiblement ovoïdale.

8. Evacuateur de condensat selon une quelconque des revendications précédentes, dans lequel la cuvette collectrice (13) de liquide de condensation a une forme sensiblement ovoïdale.

## Patentansprüche

1. Kondensatableiter für allgemeine Luft- oder Gasbehandlungseinrichtungen, mit einem den Innenbereich einer Kondensatauffangwanne (13) festlegenden Behälter (10) und mit Bohrungen, zur Verbindung des Behälters mit der Einrichtung und mit dem Außenbereich und zur Einfügung von Vorrichtungen in den Kondensatableiter, **dadurch gekennzeichnet, dass** der genannte Behälter (10) aus zwei abgedichtet gekuppelten Halbschalen (11, 12) besteht, in welchen zwei Bohrungen (14, 16) für den Kondensateintritt in den Behälter (10) und für den Ausgleich des im Behälter (10) vorhandenen Drucks in Bezug auf den in der Einrichtung vorhandenen Druck und eine dritte Bohrung (15) zur Kondensatentleerung durch ein mechanisches Ventil (A) oder zur Einfügung eines Fühlers (H) zur Aufnahme des Kondensatpegels im Behälter (10) und eine vierte Bohrung (18), die geschlossen bleiben muss, wenn die dritte Bohrung (15) zur Kondensatentleerung oder zur Einfügung eines Ventils (L) mit Außensteuerung für die Kondensatentleerung bestimmt ist, wenn die dritte Bohrung (15) einen Pegelfühler (H) enthält, vorgesehen sind.

2. Kondensatableiter nach Anspruch 1, in welchem in den zwei Halbschalen (11, 12) eine fünfte Bohrung (17) eingebracht ist, zur Einfügung eines Hahns (G) zur manuellen Kondensatentleerung, wenn das vierte Loch (18) geschlossen ist, bzw. die geschlossen wird, wenn das Ventil (L) mit Außensteuerung in die vierte Bohrung (18) eingefügt ist.

3. Kondensatableiter nach Anspruch 1 oder 2 in welchem in einer der zwei Halbschalen (11, 12) eine weitere Bohrung (19) vorgesehen ist, die geschlossen werden muss, wenn die vierte Bohrung (18) geschlossen ist oder die einen elektrischer Widerstand (M) zur Heizung der Kondensationsflüssigkeit empfangen kann, wenn das Ventil (L) mit Außensteuerung in die vierte Bohrung (18) eingefügt ist.

4. Kondensatableiter nach Anspruch 1, in welchem die zwei Bohrungen (14, 16) für den Eintritt und den Ausgleich, die eine (14) in einer Halbschale (11) und die andere in der anderen Halbschale (12) vorgesehen sind, zueinander parallele Achsen aufweisen und auf der gleichen Behälterseite (10) angeordnet sind, dabei ist die dritte Bohrung (15) in einer (11) der beiden Halbschalen vorgesehen, weist eine zu den Bohrungen (14, 16) für den Eintritt und den Ausgleich orthogonale Achse auf und ist auf einer anderen Behälterseite (10) angeordnet und die vierte Bohrung (18) ist in der anderen (12) der beiden Halbschalen vorgesehen, weist eine der beiden Bohrungen (14, 16) für den Eintritt und den Ausgleich parallele Achse auf und ist auf einer anderen Behälterseite (10) angeordnet, die der Seite auf welcher die Bohrungen (14, 16) für Eintritt und Ausgleich sich befinden gegenüberliegt.

5. Kondensatableiter nach Anspruch 2, in welchem die zwei Bohrungen (14, 16) für Eintritt und Ausgleich die eine (14) in einer Halbschale (11) und die andere in der anderen Halbschale (12) vorgesehen sind, zueinander parallele Achsen aufweisen und auf der gleichen Behälterseite (10) angeordnet sind, dabei ist die dritte Bohrung (15) in einer der Halbschalen (11) angeordnet, hat eine zu den Bohrungen (14, 16) für Eingang und Ausgleich orthogonale Achse, ist auf einer anderen Behälterseite (10) angeordnet, die vierte Bohrung (18) ist in der anderen (12) Halbschale vorgesehen, hat eine zu den Bohrungen (14, 16) für Eintritt und Ausgleich parallele Achse und ist auf einer anderen Behälterseite (10) angeordnet, die der Seite auf welcher sich die Bohrungen (14, 16) für Eintritt und Ausgleich befinden gegenüberliegt und die fünfte Bohrung (17) ist in der anderen (12) der beiden Halbschale angeordnet, weist eine zu den Bohrungen (14,16) für Eintritt und Ausgleich orthogonale Achse auf und ist noch auf einer anderen Behälterseite (10), die der Seite gegenüberliegt auf welchen sich die dritte Bohrung (15) befindet angeordnet.

6. Kondensatableiter nach Anspruch 3, in welchem die zwei Bohrungen (14, 16) für Eintritt und Ausgleich die eine (14) in einer Halbschale (11) und die andere in der anderen Halbschale (12) vorgesehen sind, zueinander parallele Achsen aufweisen und auf der gleichen Behälterseite (10) angeordnet sind, dabei ist die dritte Bohrung (15) in einer der Halbschalen (11) angeordnet, hat eine zu den Bohrungen (14, 16) für Eingang und Ausgleich orthogonale Achse, ist auf einer anderen Behälterseite (10) angeordnet, die vierte Bohrung (18) ist in der anderen (12) Halbschale vorgesehen, hat eine zu den Bohrungen (14, 16) für Eintritt und Ausgleich parallele Achse und ist auf einer anderen Behälterseite (10) angeordnet, die der Seite auf welcher sich die Bohrungen (14, 16) für Eintritt und Ausgleich befinden gegenüberliegt, dabei ist die genannte Bohrung (19) in der Nähe der vierten Bohrung (18), auf der gleichen Seite und auf einer dieser parallelen Achse angeordnet.

7. Kondensatableiter nach einem der vorliegenden Ansprüche, in welchem der Behälter (10) wesentlich annähernd eiförmig ist.

8. Kondensatableiter nach einem der vorliegenden Ansprüche, in welchem die Auffangwanne (13) für die Kondensationsflüssigkeit wesentlich eiförmig ist.

## Claims

1. A condensate evacuator for installations for general air or gas conditioning, which comprises a receptacle (10) internally delimiting a pan (13) for collecting the condensate and provided with holes for connecting the receptacle to the installation and to the outside and for inserting devices into the condensate evacuator, **characterised in that** said receptacle (10) is consists of two half-shells (11, 12) joined together with a gastight seal and having two holes (14, 16) to admit the condensate into the receptacle (10) and to equalise the pressure present in the receptacle (10) with respect to that in the installation, a third hole (15) for evacuating the condensate through a mechanical valve (A) or for inserting a sensor (H) to detect the level of condensate in the receptacle (10), and a fourth hole (18) which is to remain plugged when the third hole (15) is to be used to evacuate the condensate or to insert an externally controlled valve (L) for evacuating the condensate when the third hole (15) contains a level detector (H).

2. A condensate evacuator according to claim 1 in which, in one of the half-shells (11, 12), there is a fifth hole (17) into which a cock (G) for manual evacuation of the condensate is to be inserted when the fourth hole (18) is plugged, or is to be plugged when the externally controlled valve, is inserted in the fourth hole (18).

3. A condensate evacuator according to claim 1 or 2 in which, in one of the half-shells (11, 12) another hole (19) is made, to be plugged when the fourth hole (18) is plugged, or to contain an electrical resistor (M) for heating the condensation liquid when the externally controlled valve (L) is inserted in the fourth hole (18).

4. A condensate evacuator according to claim 1 in which the two admission and equalisation holes (14, 16) are made, one (14) in one half-shell (11) and the other in the other half-shell (12), have axes parallel to each other and are arranged on the same side of the receptacle (10), the third hole (15) is made in one (11) of the two half-shells, has an axis orthogonal to the admission and equalisation holes (14, 16) and is arranged on another side of the receptacle (10), and the fourth hole (18) is made in the other (12) of the two half-shells, has an axis parallel to the two admission and equalisation holes (14, 16), and is arranged on another side of the receptacle (10) which is opposite the side on which the admission and equalisation holes (14, 16) are arranged.

5. A condensate evacuator according to claim 2 in which the two admission and equalisation holes (14, 16) are made, one (14) in one half-shell (11) and the other in the other half-shell (12), have axes parallel to each other and are arranged on the same side of the receptacle (10), the third hole (15) is made in one (11) of the two half-shells, has an axis orthogonal to the admission and equalisation holes (14, 16), and is arranged on another side of the receptacle (10), the fourth hole (18) is made in the other (12) of the two half-shells, has an axis parallel to the two admission and equalisation holes (14, 16) and is arranged on another side of the receptacle (10) which is opposite with respect to the side on which the admission and equalisation holes (14, 16) are arranged, and the fifth hole (17) is made in the other (12) of the two half-shells, has an axis orthogonal to the admission and equalisation holes (14, 16), and is arranged on yet another side of the receptacle (10) which is opposite the side on which the third hole (15) is arranged.

6. A condensate evacuator according to claim 3, in which the two admission and equalisation holes (14, 16) are made, one (14) in one half-shell (11) and the other in the other half-shell (12), have axes parallel to each other and are arranged on the same side of the receptacle (10), the third hole (15) is made in one (11) of the two half-shells, has an axis orthogonal to the admission and equalisation holes (14, 16) and is arranged on another side of the receptacle (10), the fourth (18) is made in the other (12) of the two half-shells, has an axis parallel to the two admission and equalisation holes (14, 16) and is arranged on another side of the receptacle (10) which is opposite with respect to the side in which the admission and equalisation holes (14, 16) are arranged, and said other hole (19) is arranged close to the fourth hole (18) on the same side, and has an axis parallel to it.

7. A condensate evacuator as claimed in any one of the preceding claims, in which the receptacle (10) has a roughly ovoid shape.

8. A condensate evacuator as claimed in any one of the preceding claims, in which the pan (13) collecting condensation liquid has a roughly ovoid shape.
